# EUROPÄISCHE PATENTSCHRIFT

(11) **EP 1 612 442 B1**
(45) Veröffentlichungstag und Bekanntmachung des Hinweises auf die Patenterteilung: **22.04.2009**
(21) Anmeldenummer: 05014299.1
(22) Anmeldetag: 30.06.2005
(51) Int. Cl.: F16D 23/06

(54) **Synchronisiereinrichtung für schaltbare Getriebe**
Synchronizer device for gearbox.
Dispositif de synchronisation pour boîte de vitesses.

(30) Priorität: 30.06.2004 DE 202004010293 U
(43) Veröffentlichungstag der Anmeldung: 04.01.2006
(73) Patentinhaber: Hoerbiger Antriebstechnik GmbH, 86956 Schongau (DE)
(72) Erfinder: Giese, Manfred, 82362 Weilheim (DE); Echtler, Peter, 86956 Schongau (DE)
(74) Vertreter: Schmitz, Hans-Werner

(56) Entgegenhaltungen:
- EP-A- 0 319 233
- DE-A1- 10 343 074
- US-A- 2 864 476
- US-A- 3 247 937

## Beschreibung

Die Erfindung betrifft eine Synchronisiereinrichtung für schaltbare Getriebe, nach dem Oberbegriff des Anspruches 1. Eine derartige Synchronisiereinrichtung ist aus der EP-A-0 319 233 bekannt.

Derartige am Markt befindliche Synchronisiereinrichtungen bzw. Synchronsysteme verwenden überwiegend Reibsysteme, die mittels Nocken am Außenring die Indexierung des Reibringes oder des Reibsystems gewährleisten. Unter Indexierung wird in diesem Zusammenhang die Anschlagposition des Außenringes des Reibsystems relativ zum Synchronkörper verstanden. Ferner sind Synchronisierungen mit Indexierung mittels Mitnehmer im Innendurchmesserbereich des Außenringes wie auch im Zahnbereich der Sperrverzahnung bekannt. Bei dem zuletzt genannten System dienen als Anschlag für den Außenring bzw. das Reibsystem zusätzlich verlängerte Bereiche an der Nabe, die in frei geschnittene Zahnsegmente des Reibringes eingreifen.

Der Nachteil der bekannten Systeme, insbesondere des letztgenannten Systems, ist der Umstand, dass die Herstellung der Nabe bzw. des Synchronkörpers problematisch und damit teuer ist. Denn für die Herstellung einer entsprechenden Nabe aus Stahl-Sintermaterial ist eine Presse notwendig, die an beiden Nabenseiten vier unabhängige Pressebenen realisieren kann. Eine derartige Presse ist jedoch derzeit auf dem Markt nicht verfügbar. So ist es notwendig, wie auch grundsätzlich bei geschmiedeten Naben, die vierte erforderliche Ebene spangebend und damit auf teure Art und Weise herzustellen.

Es ist daher Aufgabe der vorliegenden Erfindung, eine Synchronisiereinrichtung für schaltbare Getriebe der im Oberbegriff des Anspruchs 1 angegebenen Art zu schaffen, deren Aufbau wesentlich vereinfacht ist und die eine konventionelle Herstellung des Synchronkörpers bzw. der Nabe möglich macht.

Die Lösung dieser Aufgabe erfolgt durch die Merkmale des Anspruches 1.

Erfindungsgemäß wird als Indexiereinrichtung zumindest ein Anschlagteil, in der Regel jedoch drei Anschlagteile, verwendet, die oberhalb des Druckstückes bzw. oberhalb der Ausnehmung für das Druckstück im Synchronkörper angeordnet ist und das sich sowohl am Synchronkörper und am Außenring formschlüssig abstützt und damit die erforderliche Indexierung des Außenringes bzw. des gesamten Reibsystems relativ zum Synchronkörper bzw. der Nabe möglich macht.

Der besondere Vorteil der erfindungsgemäßen Synchronisiereinrichtung besteht darin, dass der Synchronkörper weiterhin konventionell sowohl als Sinter- wie auch als Schmiedeteil ohne aufwändige Nachbearbeitung hergestellt werden kann. Darüber hinaus ergibt sich der Vorteil, dass die erfindungsgemäße Synchronisiereinrichtung eine so genannte Außenindexierung aufweist, die es im Vergleich zur Innenindexierung verhindert, dass der Synchronkörper durch Anbringung von entsprechenden Anschlägen geschwächt wird.

Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung eines Ausführungsbeispiels anhand der Zeichnung.

Es zeigt:
Fig. 1 eine perspektivische, teilweise geschnittene Ansicht eines Teiles einer erfindungsgemäßen Synchronisiereinrichtung,
Fig. 2 eine perspektivische Ansicht eines erfindungsgemäßen Anschlagsteiles der erfindungsgemäßen Synchroneinrichtung,
Fig. 3 eine der Fig. 2 entsprechende Darstellung zur Verdeutlichung der Abstützung des Anschlagteiles an Synchronkörper und Außenring, wobei jedoch die Schiebemuffe, ein vorderes Gangrad, ein vorderer Kupplungskörper, die vorderen Reibteile sowie der Synchronring zur Verbesserung der Darstellbarkeit der Lage des Anschlagbleches weggelassen sind, und
Fig.4 eine perspektivische Darstellung eines Synchronkörpers bzw. einer Nabe der erfindungsgemäßen Synchronisiereinrichtung.

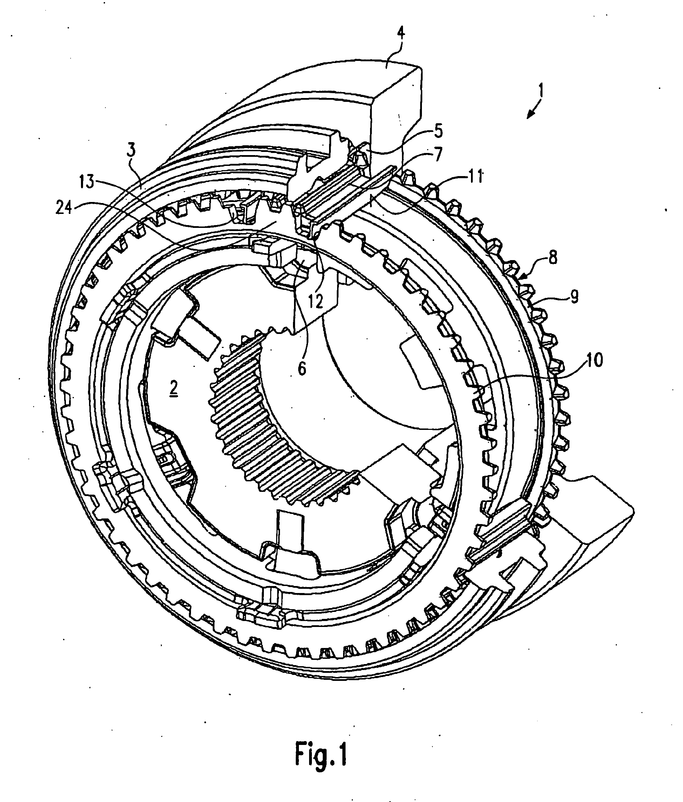

In Fig. 1 ist eine Ausführungsform einer erfindungsgemäßen Synchronisiereinrichtung 1 dargestellt, die zunächst einen Synchronkörper bzw. eine Nabe 2 aufweist, die verdrehfest auf einer nicht näher dargestellten Getriebewelle gelagert ist.

Der Synchronkörper 2 weist zumindest eine Ausnehmung 6 für ein Druckstück 7 auf, wobei bei der dargestellten besonders bevorzugten Ausführungsform jedoch drei derartige Ausnehmungen, die üblicherweise T-ähnlich mit gerundetem Boden ausgebildet sind, und entsprechend drei Druckstücke vorgesehen sind. Zur Verdeutlichung der Prinzipien der vorliegenden Erfindung wird jedoch im Folgenden lediglich auf die mit den Bezugsziffern 6 versehene Ausnehmung und das mit der Bezugsziffer 7 gekennzeichnete Druckstück Bezug genommen.

Auf dem Synchronkörper 2 ist eine in Längsrichtung der nicht näher dargestellten Getriebewelle verschiebbare auf übliche Art und Weise ausgebildete Schiebemuffe 3 angeordnet.

Bei Schaltgetrieben der hier interessierenden Art ist pro schaltbarem Gang ein Losrad vorgesehen, das relativ zur Getriebewelle verdrehbar angeordnet ist und durch den Schaltvorgang relativ zur Getriebewelle verdrehfest fixiert wird. Aufgrund der Teilansicht ist in Fig. 1 nur ein Losrad (4) eines Ganges dargestellt, das mit einem verdrehfest angeordneten zugeordneten Kupplungskörper 5 versehen ist.

Die erfindungsgemäße Synchronisiereinrichtung 1 weist ferner eine Reibeinrichtung 8 auf, von der in Fig. 1 lediglich zwei Außenringe 9 und 10 zu sehen sind. Der Außenring 9 ist hierbei dem Losrad 4 zugeordnet, während der Außenring (10) einem weiteren auf der Getriebewelle für einen anderen Gang angeordneten Losrad zugeordnet ist, das jedoch aus Gründen der Übersichtlichkeit nicht näher dargestellt ist. Wie Fig. 1 verdeutlicht, sind durch diese Anordnung die Außenringe 9 und 10 zu beiden Seiten des Synchronkörpers 2, in Längsrichtung der nicht näher dargestellten Getriebewelle gesehen, angeordnet. Die beiden Außenringe 9, 10 können vorzugsweise als Ziehteile ausgebildet sein.

Ferner ist es möglich, dass die Reibeinrichtung wie üblich einen Reibring und einen Innenring aufweist, die jedoch in Fig. 1 nicht näher dargestellt sind, da sie für die Erläuterung der Prinzipien vorliegender Erfindung nicht von Bedeutung sind.

Ferner weist die erfindungsgemäße Synchronisiereinrichtung 1 eine Indexiereinrichtung auf, die dazu dient, die Anschlagposition der Außenringe 9 bzw. 10 relativ zum Synchronkörper 2 zu definieren.

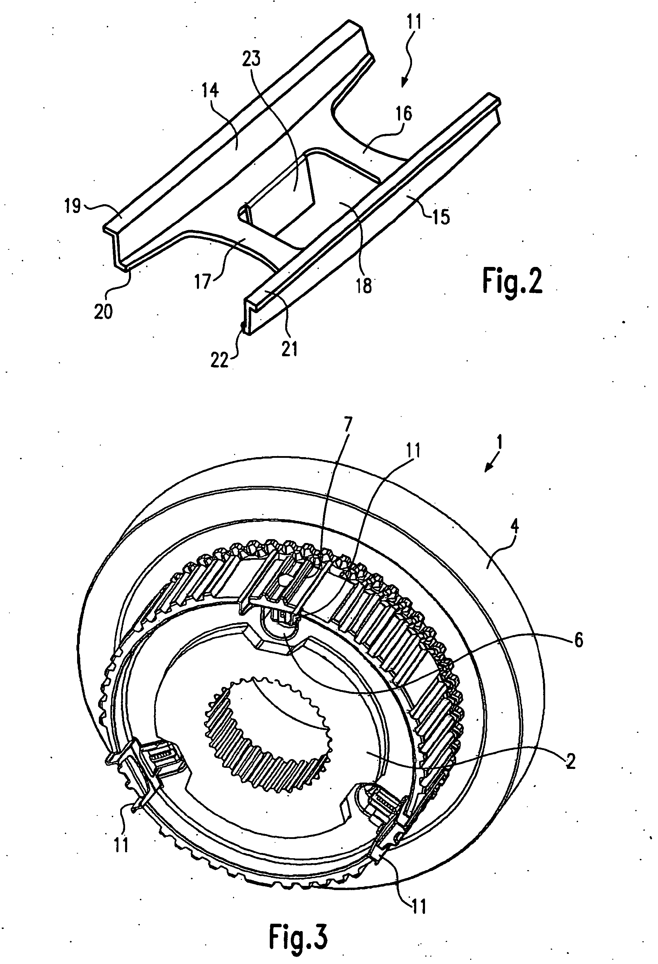

Bei der dargestellten Ausführungsform weist diese Indexiereinrichtung Anschlagteile 11 auf, von denen in Fig. 1 nur ein Anschlagteil, in Fig. 3 jedoch drei Anschlagteile 11 zu sehen sind. Es ist jedoch bevorzugt, dass drei derartige Anschlagteile vorgesehen sind.

Wie Fig. 1 verdeutlicht, ist das Anschlagteil 11 wannenförmig ausgebildet und greift in jeweils zwei Ausnehmungen der Außenringe 9 bzw. 10 ein, wobei in Fig. 1 nur die Ausnehmungen 12 und 13 des Außenringes 10 sichtbar sind. Diese beiden Ausnehmungen 12 und 13 sind benachbart zu einem Zahnpaar 24 der Außenverzahnung des Außenringes 10 angeordnet. Das Anschlagteil 11 überbrückt den Abstand zwischen den beiden benachbarten Außenringen 9 und 10, so dass es beide Außenringe 9 und 10 gegenüber dem Synchronkörper 2 in definierbaren Anschlagpositionen festlegt.

In Fig. 2 ist eines der Anschlagteile 11 im Detail dargestellt. Das Anschlagteil 11 hat eine wannenähnliche Ausbildung und ist in Draufsicht gesehen in etwa H-förmig ausgebildet.

Hierzu weist das Anschlagteil 11 zwei zueinander beabstandete Seitenwände 14 und 15 auf, die mittels zweier Querstege 16 und 17 verbunden sind. Fig. 2 zeigt, dass die beiden Querstege 16 und 17 beabstandet zueinander angeordnet sind und im Wesentlichen im rechten Winkel zu den Seitenwänden 14 und 15 an deren unteren Rand anschließen, so dass sich die wannenähnliche Ausbildung ergibt.

Fig. 2 zeigt ferner, dass die Seitenwände 14 und 15 und die Querstege 16 und 17 eine Ausnehmung 18 von im Wesentlichen rechteckiger Kontur begrenzen. Diese Ausnehmung 18 nimmt im Montagezustand den Kopf des jeweils zugeordneten Druckstückes des Synchronkörpers 2 auf.

Fig. 2 verdeutlicht ferner, dass sich an den freien Enden der beiden Seitenwände 14 und 15 jeweils Längsstege erstrecken, wobei die Seitenwand 5 mit den Längsstegen 21 und 22 und die Seitenwand 4 mit den Längsstegen 19 und 20 versehen sind. Die Längsstege erstrecken sich hierbei in entgegengesetzte Richtungen, so dass sich im Querschnitt gesehen eine Z-förmige Ausbildung der Anordnung der Seitenwände 15 und 14 mit ihren jeweiligen Längsstegen 21 und 22 bzw. 19 und 20 ergibt.

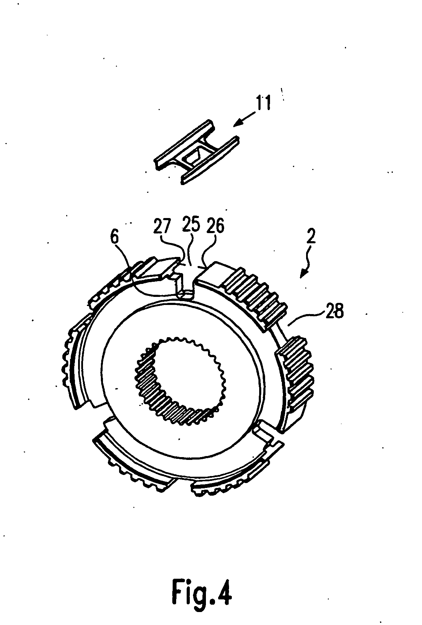

Fig. 2 verdeutlicht ferner, dass die Querstege 16 und 17 jeweils in die unteren Längsstege 20 bzw. 22 übergehen und das am unteren Längssteg 20 im Bereich der Ausnehmung 18 eine nach unten vorragende Lasche 23 angeordnet ist, die im Wesentlichen rechteckförmig ausgebildet ist. Diese Lasche 23 dient zur Fixierung des Anschlagteiles 11 gegen axiales Verschieben, wozu sie sich im Einbauzustand an einem Steg des Synchronkörpers 2 abstützt. Sind bei einer erfindungsgemäßen Synchronisiereinrichtung drei Anschlagteile 11 vorgesehen, sind alle in der zuvor beschriebenen und anhand der Fig. 2 erläuterten Ausführungsform ausgebildet, wobei zur Offenbarung der Form und Ausgestaltung des Anschlagbleches 11 zusätzlich zu der vorangehenden Beschreibung explizit auf die zeichnerische Darstellung der Fig. 2 Bezug genommen wird. In Fig. 4 ist der Synchronkörper 2 der erfindungsgemäßen Synchronisiereinrichtung 1 nochmals zur Verdeutlichung seines Aufbaus als Einzelteil dargestellt. Die Darstellung zeigt, dass der Synchronkörper 2 zusätzliche Aussparungen 25 oberhalb der Ausnehmung 6 für das Druckstück aufweist, in die das Anschlagblech 11 eingelegt werden kann. Dementsprechend sind die Begrenzungswände 26 und 27 dieser, hier vorzugsweise rechteckigen Aussparungen 25 die Anschlagflächen für das Anschlagteil 11. Die übrigen Aussparungen oberhalb der jeweils vorgesehenen Ausnehmungen für die Druckstücke sind entsprechend ausgebildet.

Ferner weist die dargestellte Ausführungsform optional Ausnehmungen 28 auf, die, wie die Aussparung 25, im Bereich der Außenverzahnung des Synchronkörpers 2 angeordnet sind, in die vorzugsweise Anschlagteile eingelegt werden können, um eine axiale Anschlagmöglichkeit für die Schiebemuffe möglich zu machen.

### Bezugszeichenliste

- 1: Synchronisiereinrichtung
- 2: Synchronkörper
- 3: Schiebemuffe
- 4: Losrad
- 5: Kupplungskörper
- 6: Ausnehmung für das Druckstück
- 7: Druckstück
- 8: Reibeinrichtung
- 9,10: Außenring
- 11: Anschlagteil
- 12,13: Anschlagausnehmungen
- 14,15: Seitenwände
- 16,17: Querstege
- 18: Ausnehmung für das Druckstück
- 19-22: Längsstege
- 23: Lasche
- 24: Zahnpaar
- 25: Aussparungen
- 26,27: Anschlagflächen
- 28: Ausnehmungen im äußeren Zahnkranz des Synchronkörpers 2

## Patentansprüche

1. Synchronisiereinrichtung (1) für schaltbare Getriebe
- mit einem verdrehfest auf einer Getriebewelle gelagerten Synchronkörper (2), der zumindest eine Ausnehmung (6) für zumindest ein Druckstück (7) aufweist;
- mit einer auf dem Synchronkörper (2) angeordneten und in Längsrichtung der Getriebewelle verschiebbaren Schiebemuffe (3);
- mit einem auf der Getriebewelle angeordneten Losrad (4) pro schaltbarem Gang, das mit einem Kupplungskörper (5) verdrehfest verbunden ist;
- mit einer Reibeinrichtung (8), die zumindest einen Außenring (9) bzw. (10) pro Losrad (4) aufweist;
- und mit einer Indexierungseinrichtung, die am Außenring (9,10) zur Definition seiner Anschlagposition relativ zum Synchronkörper (2) angeordnet ist, **dadurch gekennzeichnet,**
- **dass** die Indexiereinrichtung zumindest ein separates Anschlagteil (11) aufweist, das oberhalb der Ausnehmung (6) des Druckstückes (7) zwischen Synchronkörper (2) und Außenring (9) bzw. (10) angeordnet ist, und
- **dass** das Anschlagteil (11), in Längsrichtung der Getriebewelle gesehen, den Abstand zwischen den zwei benachbarten zu beiden Seiten des Synchronkörpers (2) angeordneten Außenringen (9,10) überbrückt.

2. Synchronisiereinrichtung nach Anspruch 1, **dadurch gekennzeichnet, dass** das Anschlagteil (11) in Anschlagausnehmungen (12,13) des Außenringes (9) bzw. (10) eingreift.

3. Synchronisiereinrichtung nach Anspruch 1 oder 2,
**dadurch gekennzeichnet, dass** das Anschlagteil (11) als Tiefzieh-Blechteil ausgebildet ist.

4. Synchronisiereinrichtung nach einem der Ansprüche 1 bis 3, **dadurch gekennzeichnet, dass** das Anschlagteil (11) zwei sich im Wesentlichen parallel zueinander erstreckende Seitenwände (14), (15) aufweist, die mittels zweier sich quer zu den Seitenwänden (14), (15) erstreckenden Querstege (16,17) verbunden sind.

5. Synchronisiereinrichtung nach Anspruch 4, **dadurch gekennzeichnet, dass** die beabstandeten Querstege (16), (17) und die Seitenwände (14), (15) eine Ausnehmung (18) für den Kopf bzw. Schaft des. zugeordneten Druckstückes (7) begrenzen.

6. Synchronisiereinrichtung nach Anspruch 4 oder 5, **dadurch gekennzeichnet, dass** die Seitenwand (14) bzw. (15) an ihren freien Enden im rechten Winkel abstehende, in gegenüberliegende Richtungen weisende Längsstege (19), (20), bzw. (21), (22) aufweist.

7. Synchronisiereinrichtung nach einem der Ansprüche 1 bis 6, **dadurch gekennzeichnet, dass** das Anschlagteil (11) eine Lasche (23) zur Fixierung gegen axiales Verschieben aufweist, die sich im Einbauzustand an einem Steg des Synchronkörpers (2) abstützt.

8. Synchronisiereinrichtung nach einem der Ansprüche 4 bis 7, **dadurch gekennzeichnet, dass** das Anschlagteil (11) in Draufsicht gesehen in etwa H-förmig ausgebildet ist.

9. Synchronisiereinrichtung nach einem der Ansprüche 4 bis 8, **dadurch gekennzeichnet, dass** das Anschlagteil (11) eine wannenförmige Ausgestaltung aufweist.

## Claims

1. A synchronizer device (1) for shiftable transmissions, comprising
- a synchronizer body (2) rotationally fixedly supported on a transmission shaft, said body comprising at least one recess (6) for at least one pressure member (7);
- a sliding sleeve (3) arranged on the synchronizer body (2) and displaceable in the longitudinal direction of the transmission shaft;
- an idle wheel (4) for each shiftable gear, said wheel being arranged on the transmission shaft and rotationally fixedly connected to a clutch body (5);
- a friction device (8) comprising at least one outer ring (9) or (10) for each idle wheel (4); and
- an indexing device arranged at the outer ring (9, 10) for defining the abutting position thereof in respect to the synchronizer body (2), **characterized in that**
- the indexing device comprises at least one separate abutting part (11) which is arranged above the recess (6) of the pressure member (7) between the synchronizer body (2) and the outer ring (9) or (10), and
- that the abutting part (11), when viewed in the longitudinal direction of the transmission shaft, bridges the gap between the two outer rings (9, 10) arranged adjacent to both sides of the synchronizer body (2).

2. The synchronizer device of claim 1, **characterized in that** the abutting part (11) engages in abutting recesses (12, 13) of the outer ring (9) or (10).

3. The synchronizer device of claim 1 or 2, **characterized in that** the abutting part (11) is formed as a deep-drawing sheet metal.

4. The synchronizer device of one of claims 1 to 3, **characterized in that** the abutting part (11) has two side walls (14, 15) extending substantially in parallel with each other, said side walls being connected by means of two cross webs (16, 17) extending transversely to the side walls (14, 15).

5. The synchronizer device of claim 4, **characterized in that** the spaced cross webs (16, 17) and the side walls (14, 15) delimit a recess (18) for the head or shaft of the associated pressure member (7).

6. The synchronizer device of claim 4 or 5, **characterized in that** the side wall (14) or (15) has, at the free ends thereof, longitudinal webs (19, 20) or (21, 22) protruding in a right angle and facing in opposite directions.

7. The synchronizer device of one of claims 1 to 6, **characterized in that** the abutting part (11) has a lug (23) for fixation against an axial displacement, said lug resting on a web of the synchronizer body (2) in the assembled state.

8. The synchronizer device of one of claims 4 to 7, **characterized in that** the abutting part (11), in a plan view, is formed approximately H-shaped.

9. The synchronizer device of one of claims 4 to 8, **characterized in that** the abutting part (11) is formed in the shape of a tub.

## Revendications

1. Dispositif de synchronisation (1) pour boîte de vitesses
- avec un corps synchrone (2) logé sans possibilité de rotation sur un arbre de boîte qui présente au moins un évidement (6) pour au moins un élément de pression (7) ;
- avec un manchon coulissant (3) mobile dans le sens longitudinal de l'arbre de boîte et disposé sur le corps synchrone (2) ;
- avec une roue indépendante (4) disposée sur l'arbre de boîte par vitesse commutable qui est reliée sans possibilité de rotation au corps d'embrayage (5) ;
- avec un dispositif de friction (8) qui présente au moins une bague extérieure (9) ou (10) par roue indépendante (4) ;
- et avec un dispositif d'indexation qui est disposé sur la bague extérieure (9, 10) pour la définition de sa position de butée par rapport au corps synchrone (2), **caractérisé en ce que**
- le dispositif d'indexation présente au moins une partie de butée (11) séparée qui est disposée au-dessus de l'évidement (6) de l'élément de pression (7) entre le corps synchrone (2) et la bague extérieure (9) ou (10), et
- la partie de butée (11), vue dans le sens longitudinal de l'arbre de boîte, couvre la distance entre les deux bagues extérieures (9, 10) disposées de manière contiguë des deux côtés du corps synchrone (2).

2. Dispositif de synchronisation selon la revendication 1, **caractérisé en ce que** la partie de butée (11) s'engage dans des évidements de butée (12, 13) de la bague extérieure (9) ou (10).

3. Dispositif de synchronisation selon la revendication 1 ou 2, **caractérisé en ce que** la partie de butée (11) est réalisée comme une pièce en tôle d'emboutissage.

4. Dispositif de synchronisation selon l'une quelconque des revendications 1 à 3, **caractérisé en ce que** la partie de butée (11) présente deux parois latérales (14), (15) s'étendant essentiellement parallèlement l'une à l'autre, qui sont reliées au moyen de deux branches transversales (16, 17) s'étendant transversalement aux parois latérales (14), (15).

5. Dispositif de synchronisation selon la revendication 4, **caractérisé en ce que** les branches transversales (16), (17) espacées et les parois latérales (14), (15) délimitent un évidement (18) pour la tête ou le corps de l'élément de pression (7) associé.

6. Dispositif de synchronisation selon la revendication 4 ou 5, **caractérisé en ce que** la paroi latérale (14) ou (15) présente des branches longitudinales (19), (20) ou (21), (22) dirigées dans des sens opposés, dépassant à angle droit au niveau de ses extrémités libres.

7. Dispositif de synchronisation selon l'une quelconque des revendications 1 à 6, **caractérisé en ce que** la partie de butée (11) présente une languette (23) pour la fixation contre tout déplacement axial, qui s'appuie à l'état d'installation sur une branche du corps synchrone (2).

8. Dispositif de synchronisation selon l'une quelconque des revendications 4 à 7, **caractérisé en ce que** la partie de butée (11), vue en vue en élévation, est réalisée à peu près en forme de H.

9. Dispositif de synchronisation selon l'une quelconque des revendications 4 à 8, **caractérisé en ce que** la partie de butée (11) présente une configuration en forme de cuvette.
